(19) Europäisches Patentamt
European Patent Office
Office européen des brevets

(11) **EP 2 112 850 A1**

(12) **EUROPEAN PATENT APPLICATION**

(43) Date of publication:
**28.10.2009 Bulletin 2009/44**

(51) Int Cl.:
**H04W 48/20** (2009.01)

(21) Application number: **09154431.2**

(22) Date of filing: **05.03.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **22.04.2008 JP 2008110897**

(71) Applicant: **Fujitsu Limited
Kawasaki-shi, Kanagawa 211-8588 (JP)**

(72) Inventor: **Oguchi, Naoki
Kawasaki-shi, Kanagawa 211-8588 (JP)**

(74) Representative: **Stebbing, Timothy Charles
Haseltine Lake LLP
Lincoln House, 5th Floor
300 High Holborn
London WC1V 7JH (GB)**

(54) **Radio communication method and terminal device**

(57)    A radio communication method for performing radio communication between a base station (10-1, 10-2, 10-3) and a terminal (20), including the steps of: comparing field strength of the base station (10-2) which transmitted a reconnection instruction and field strength of a base station (10-1, 10-3) located adjacent to the base station (10-2), when the terminal (20) in a power saving standby mode receives the reconnection instruction from the base station (10-2), and controlling whether the terminal reconnects or not to the base station (10-2) which transmitted the reconnection instruction, according to the result of the comparison.

FIG. 7

**Description**

The present invention relates to a radio communication method and a terminal device which performs radio communication.

WiMAX, which is one radio communication system, defines the hand over procedure for switching the connection of a mobile station (MS) from a serving Base Station (SBS) to an adjacent base station (BS) having higher field strength (e.g. see IEEE 802.16e-2005).

Once hand over procedure occurs, the mobile station transmits and receives control messages to and from a newly connected destination base station, even if user data is not transmitted and received to and from the base station. Bandwidth is used redundantly by the transmission and reception of the control message.

To avoid this, WiMAX defines a connection state called "idle mode" (see IEEE 802.16e-2005). In the idle mode, the mobile station enters the power saving standby state, and need not transmit and receive the control message for hand over, even if the base station is switched. Thereby system resources can be saved.

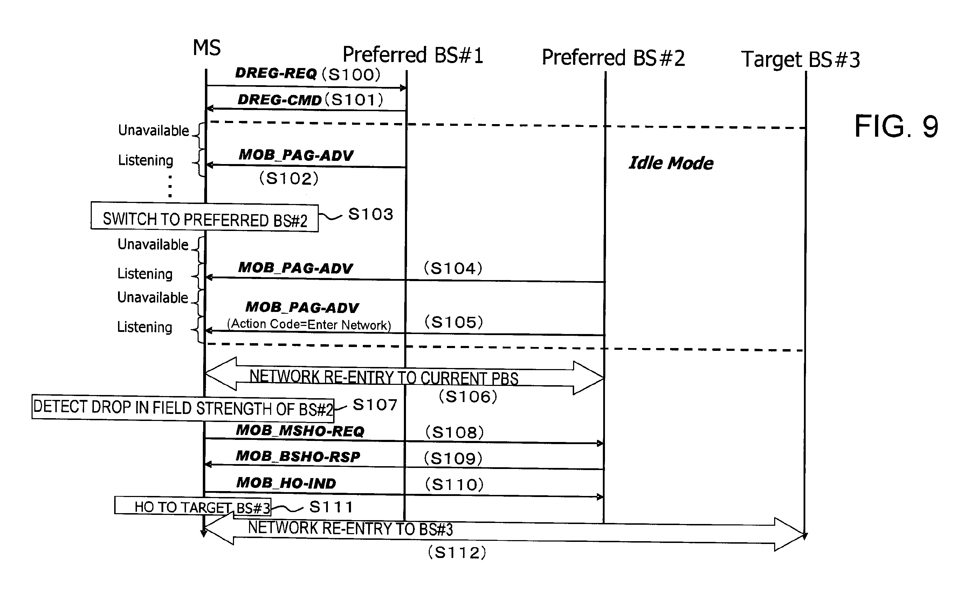

Fig. 9 shows a sequence example from entering idle mode until the mobile station starts the reconnection operation with a new base station.

The mobile station MS exchanges a control message (DREG-REQ, DREG-CMD) with a base station BS#1, and enters idle mode (S101, S102). DREG-CMD specifies the length of a listening interval (Paging Listening Interval) and an unavailable interval (Paging Unavailable Interval).

In the idle mode, these two intervals are alternated repeatedly. The mobile station MS does not communicate with the base station BS#1 during the unavailable interval, and receives a control message (Page Advertisement (MOB_PAG-ADV) message) in the listening interval (S102). This control message specifies an action code (e.g. reconnection instruction to network) from the base station BS to the mobile station MS.

When radio waves of the base station BS#1 become weak, the mobile station MS switches to the base station BS#2 (S103). At this time, the mobile station MS, which is in the idle mode, does not exchange the control message for hand over with the new base station BS#2. The mobile station MS simply receives the MOB_PAG-ADV message from the base station BS#2 in the listening interval (S102, S104).

Then the mobile station MS receives the MOB_PAG-ADV message, including an action code "Enter Network" (code to prompt reconnection of mobile station MS since the base station BS#2 must send user data to the mobile station MS) from the base station BS#2 (S105).

When this message is received, the mobile station MS executes the reconnection operation (Re-entry) to the base station BS#2 (S106). Thereby the mobile station MS clears the idle mode so that user data from the base station BS#2 can be received.

The above mentioned example concerns the downlink direction. In the case of the uplink, the mobile station MS itself executes the reconnection operation when the user data must be transmitted (S106). The mobile station MS executes the reconnection operation by itself without receiving the MOB_PAG-ADV message, including the action code "Enter Network".

However when the mobile station MS is positioned near the cell boundary of the base station BS#2, the mobile station MS must execute the reconnection operation again for hand over with an adjacent base station immediately after exiting the idle mode and reconnecting with the base station BS#2.

For example, as Fig. 9 shows, after the reconnection operation with the base station BS#2 (S106), the mobile station MS detects a decline of field strength and executes the hand over procedure with the base station BS#2 (S108 to 5111), and executes the reconnection operation with the base station BS#3 (S112).

As a result, the mobile station MS ends up with executing the reconnection operation with the two base stations BS#2 and BS#3 (S106, S112), therefore the control message is transmitted and received redundantly, and bandwidth is used redundantly.

In case user data occurs in the uplink direction as well, the mobile station MS executes the reconnection operation with the two base stations BS#2 and BS#3. Therefore the air (radio) band resource is used redundantly in the same way.

With the foregoing in view, it is desirable to provide a radio communication method, terminal device and radio communication system in which waste of radio resources is reduced.

An embodiment of the present invention provides a radio communication method for performing radio communication between a base station and a terminal, including the steps of: comparing a field strength of a said base station which has transmitted a reconnection instruction with the field strength of base stations located adjacent to the base station, when the terminal in a power saving standby mode receives the reconnection instruction from the base station, and controlling whether the terminal reconnects or not to the base station which transmitted the reconnection instruction, according to the result of the comparison.

Another embodiment of the present invention provides a radio communication method for performing radio communication between a base station and a terminal, including the steps of: comparing field strength of the base station to which (with which) the terminal last registered its position, and field strength of base stations located adjacent to the base station, when the terminal in a power saving standby state quits the state to transmit user data, and controlling whether the terminal reconnects or not to the base station to which the terminal last registered its position, according to the result of the comparison.

Another embodiment of the present invention provides a terminal for performing radio communication with a base station, including: a judgment unit which compares field strength of the base station which transmitted a reconnection instruction and field strength of base stations located adjacent to the base station, when the terminal in a power saving standby state receives the reconnection instruction from the base station; and a transmission and reception processing unit which decides whether the terminal should reconnect or not to the base station which transmitted the reconnection instruction, according to the result of the comparison.

Another embodiment of the present invention provides a terminal for performing radio communication with a base station, including: a judgment unit which compares field strength of the base station to which the terminal last registered its position and field strength of base stations located adjacent to the base station, when the terminal in a power saving standby state quits the state to transmit user data; and a transmission and reception unit which switches whether the terminal reconnects or not to the base station to which the terminal registered its position last time, according to the result of the comparison.

According to the present invention, a radio communication method, terminal device and radio communication system in which use of the air (radio) band resource is reduced, can be provided.

The present invention may also be provided in the form of software consisting of one or more programs to be executed by a processor of a terminal device.

Additional features and advantages of the invention (embodiment) will be set forth in part in the description which follows, and in part will be obvious from the description, or may be learned by practice of the invention.

It is to be understood that both the foregoing general description and the following detailed description are exemplary and explanatory only and are not restrictive of the invention, as claimed.

Reference is made, by way of example only, to the accompanying drawings in which:

Fig. 1 shows a diagram depicting a configuration example of a radio communication system;
Fig. 2 shows a diagram depicting a configuration example of a base station;
Fig. 3 shows a diagram depicting a configuration example of a mobile station;
Fig. 4 shows a sequence diagram depicting an example of an idle mode transition phase;
Fig. 5 shows a sequence diagram depicting an example of a network reconnection phase;
Fig. 6 shows an example of an adjacent base station information table;
Fig. 7 shows a sequence diagram depicting an example of a network reconnection phase;
Fig. 8 shows a sequence diagram depicting an example of a network reconnection phase; and
Fig. 9 shows a sequence diagram depicting an operation example of a conventional idle mode transition to reconnection.

Embodiments of the present invention will now be described with reference to the drawings.

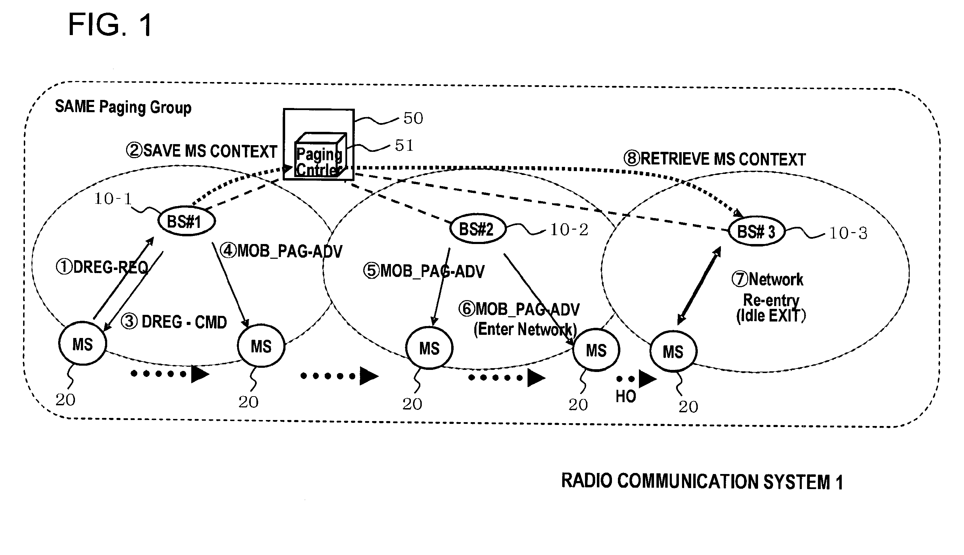

Fig. 1 is a diagram depicting a network configuration example of a radio communication system 1. The radio communication system 1 has base station devices (hereafter "base stations") (BS#1 to BS#3) 10-1 to 10-3, a terminal device (hereafter "mobile station") (MS) 20 and a host device 50.

Fig. 1 shows a state where the mobile station 20 moves from the base station 10-1 to the base station 10-3 via the base station 10-2. A circle around each base station 10-1 to 10-3 indicates a radio range (cell range) from each base station 10-1 to 10-3.

The host device 50 is a gateway (ASN-GW), for example. The host device 50 has a paging controller 51, and the paging controller 51 holds an MS context (connection parameters) of the mobile station 20.

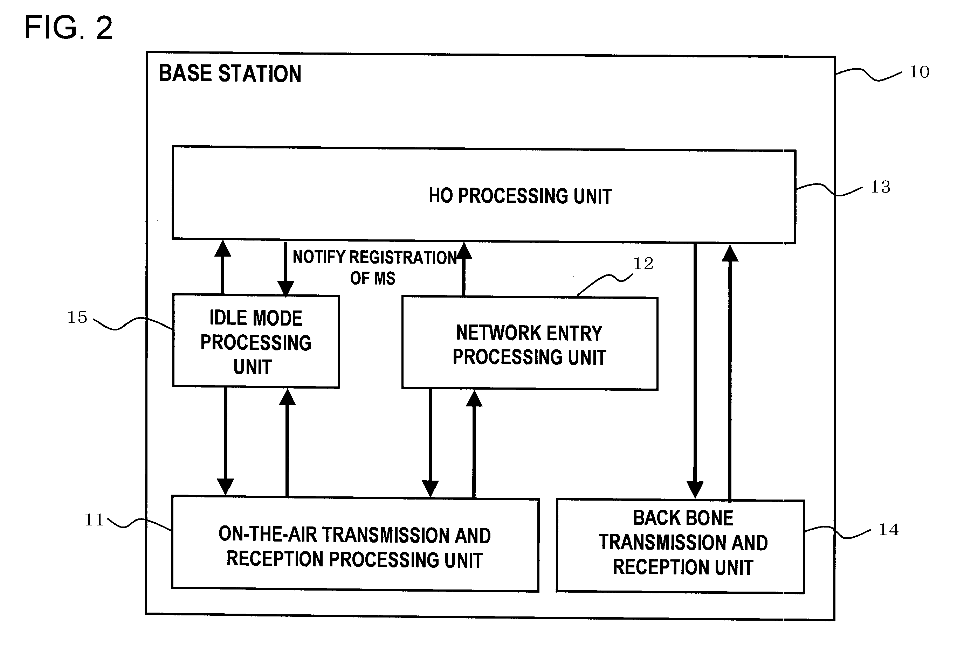

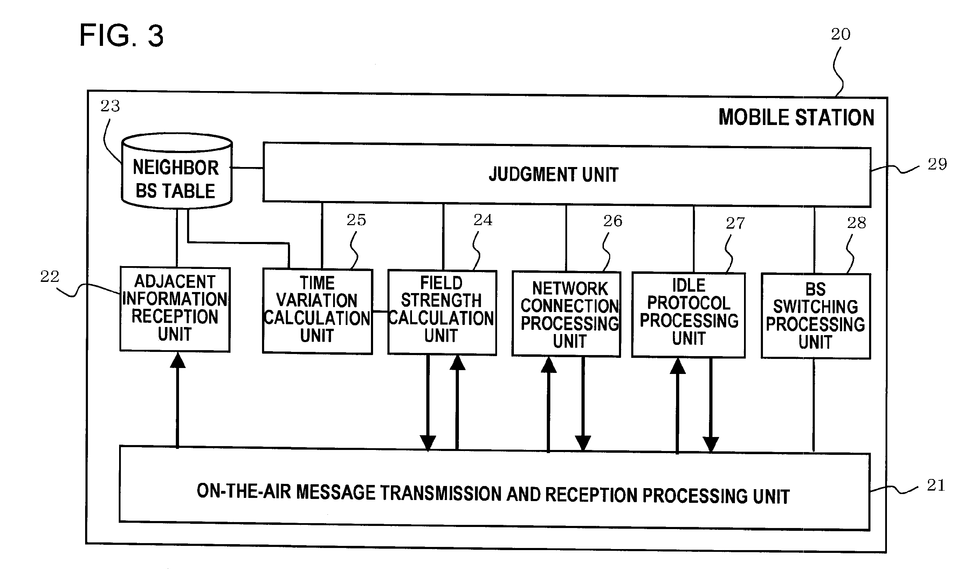

Fig. 2 is a diagram depicting a configuration example of the base station 10-1 to 10-3, and Fig. 3 is a diagram depicting a configuration example of the mobile terminal 20. Each base station 10-1 to 10-3 has an identical configuration, so it is described as base station 10 unless otherwise specified.

The base station 10 has an on-the-air transmission and reception processing unit 11, a network entry processing unit 12, a hand over processing unit 13, a back bone transmission and reception unit 14 and an idle mode processing unit 15.

The on-the-air transmission and reception unit 11 converts various messages from each processing unit 12 into radio waves, transmits them to the mobile station 20, extracts various messages from the radio waves received from the mobile station 20, and outputs them to each processing unit 12.

The network entry processing unit 12 processes the registration procedure protocol for the mobile station 20 to connect with the base station 10. Specifically, the network entry processing unit 12 generates a control message and transmits to the mobile station 20 via the on-the-air transmission and reception processing unit 11, and receives the control message from the mobile station 20 via the on-the-air transmission and reception processing unit 11. When a new mobile station 20 is registered based on the registration procedure protocol, the network entry processing unit 12 notifies the registration of the mobile terminal 20 to the hand over processing unit 13. At this time, the network entry processing unit 12 outputs the MS context (connection parameter) acquired from the mobile station 20 by the registration procedure to the hand over processing unit 13.

The hand over processing unit 13 executes the hand over procedure when the mobile station 20 executes hand over. The hand over processing unit 13 also holds the MS context and transmits the MS context to the base station at the hand over destination via the back bone transmission and reception unit 14. When the transition of mobile station 20 to idle mode is notified by the idle mode processing unit 15, the hand over processing unit 13 requests temporary buffering of the MS context to the host device 50. When the registration of the mobile station 20 is notified from the network entry processing unit 12, if the base station 10 is a base station at the hand over destination (Target BS), the hand over processing unit 13 requests the MS context of the mobile terminal 20 from the hand over source base station or host device 50 via the back bone transmission and reception unit 14, and holds the MS context.

The back bone transmission and reception unit 14 is connected with another base station or the host device 50 via the back bone network, transmits, and receives the MS context and various messages.

The idle mode processing unit 15 performs protocol processing in the idle mode. For example, when DREG-REQ (idle mode transition request message) is received from the mobile station 20 via the on-the-air transmission and reception processing unit 11, the idle mode processing unit 15 generates various messages (e.g. DREG-CMD) in the idle mode, and transmits them to the mobile station 20 via the on-the-air transmission and reception processing unit 11. Also when the hand over processing unit 13 receives user data addressed to the mobile station 20, for example, the idle mode processing unit 15 transmits a network reconnection instruction (MOB_PAG-ADV, including action code "Enter Network"), to the mobile station 20.

Fig. 3 shows a diagram depicting a configuration example of the mobile station 20. The mobile station 20 has an on-the-air message transmission and reception processing unit (hereafter "message transmission and reception unit") 21, an adjacent information reception unit 22, neighbour BS table (hereafter "adjacent table") 23, a field strength calculation unit 24, time variation calculation unit 25, network connection processing unit 26, idle protocol processing unit 27, BS switching processing unit 28, and judgment unit 29.

The message transmission and reception unit 21 transmits and receives various messages synchronizing with a frame from the connected base station 10, and measures the field intensity of a synchronized frame.

The adjacent information reception unit 22 receives an adjacent base station information message from the communicating base station (serving BS) 10 via the message transmission and reception unit 21, and stores the information included in this message in the adjacent table 23.

The adjacent table 23 stores information on the adjacent base stations (e.g. BSID). The adjacent table 23 also stores the time variations of field strength (CINR (Carrier to Interference plus Noise Ratio) in the case of the present embodiment) for each adjacent base station.

The field strength calculation unit 24 calculates a value of field strength, by processing the field strength, based on the field strength measured by the message transmission and reception unit 21.

The time variation calculation unit 25 calculates the average of the field strength and time variation (differential value) which indicates how much the field strength changed over time, based on the field strength from the field strength calculation unit 24, and stores this in the adjacent table 23. Details on calculation will be described later.

The network connection processing unit 26 processes the protocol message for the mobile station 20 to connect to the network. The network connection processing unit 26 transmits and receives the protocol message to and from the base station 10 via the message transmission and reception unit 21.

The idle protocol processing unit 27 processes a protocol message required for the idle mode. The idle protocol processing unit 27 generates an idle mode transition request message (e.g. DREG-REQ), and transmits it to the base station 10 via the message transmission and reception unit 21, and processes a message on the idle mode (e.g. DREG-CMD, MOB_PAG-ADV) received from the base station 10 via the message transmission and reception unit 21.

The BS switching processing unit 28 performs processing to switch the connection of the base station 10, generates a message for switching, and transmits and receives the message to and from the base station 10 via the message transmission and reception unit 21.

The judgment unit 29 judges a timing to exit the idle mode based on the time variation of the field strength from the adjacent table 23 and information from the idle protocol processing unit 27, and instructs the network connection processing unit 26 and BS switching processing unit 28 to switch the network connection and the base station 10. Details will be described later.

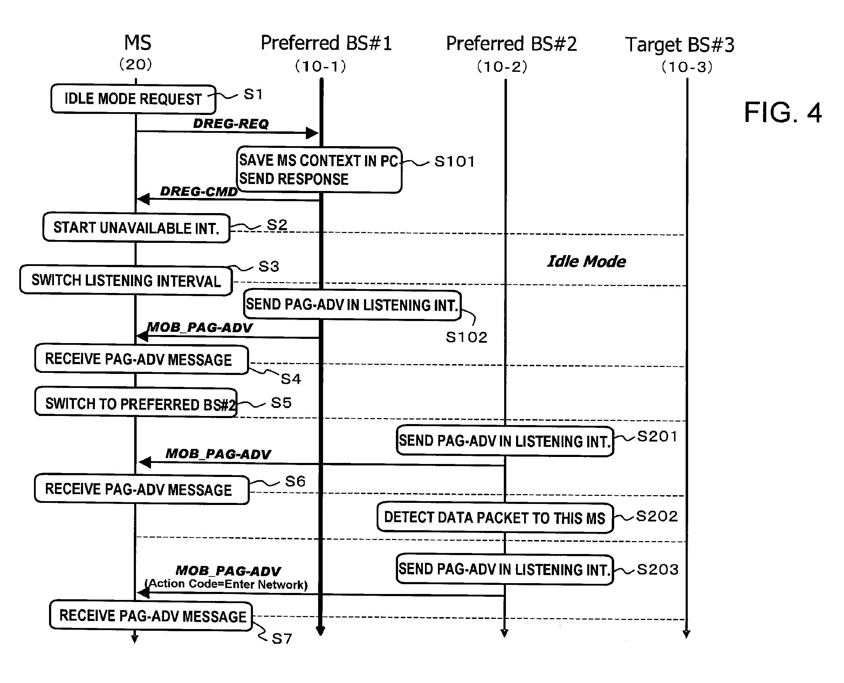

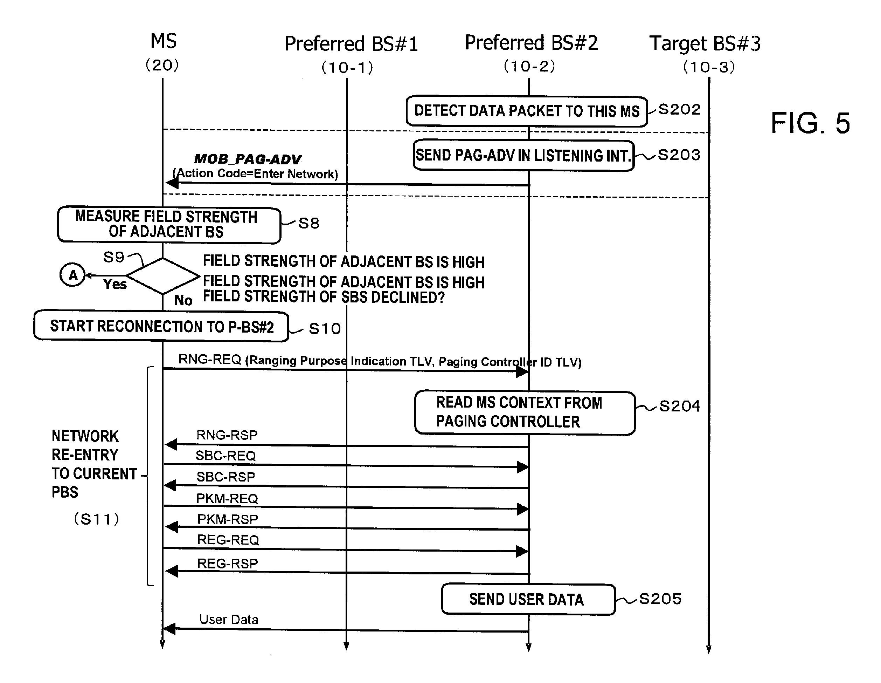

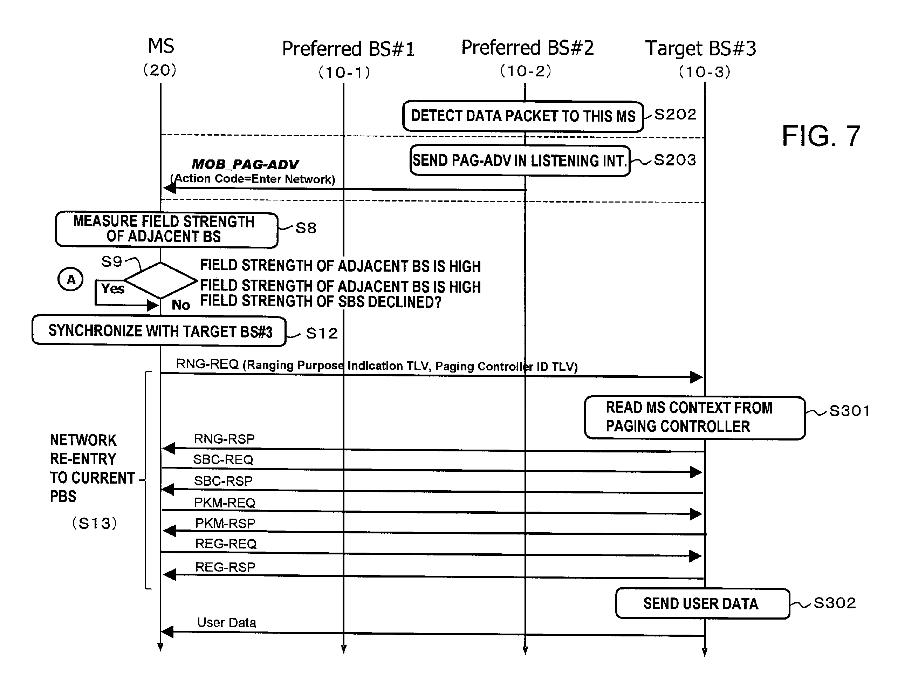

Now the operation will be described. The general operation consists of two phases: an idle mode transition phase (Fig. 4), and a network reconnection phase (Fig. 5 or Fig. 7). The network reconnection phase has a case of the mobile station 20 being distant from the cell boundary (Fig. 5), and a case of the mobile station 20 being close to the cell boundary (Fig. 7).

The present operation example is an example when the mobile station 20, which is connected with the base station 10-1, transits to the idle mode, and moves from the base station 10-2 to the base station 10-3, as shown in Fig. 1.

When the mobile station 20 transits to the idle mode, the base station 10-1 saves the MS context to the host device 50, and deletes the network registration state. Hence the mobile station 20 enters a state of not being connected with the network. However, even in the idle mode, the mobile station 20 must allow the base station 10-1 to know the position, so that the message (MOB_PAG-ADV) can be received. For this, according to the present embodiment, the base station 10-1 is called the "Preferred BS" (hereafter "PBS") in the idle mode, so as to be distinguished from the serving BS. In the example in Fig. 1, after shifting to the idle mode, the base station 10-1 becomes PBS first, then after the mobile station 20 moves into the cell range of the base station 10-2, the base station 10-2 becomes the PBS. The PBS 10-1 and PBS 10-2 accept the position registration of the mobile station 20 when the mobile station 20 moves in the respective cell range.

Now the idle mode transition phase (Fig. 4) will be described. When the transition to the idle mode is determined, the mobile station 20 requests the transition to the idle mode to the connected base station 10-1 (S1). For example, the idle protocol processing unit 27 generates DREG-REQ based on the decision to transit to the idle mode, and transmits it to the base station 10-1 via the message transmission and reception unit 21.

When DREG-REQ is received, the base station 10-1 saves the MS context of the mobile station 20 in the host device 50, and transmits the response message DREG-CMD to the mobile station 20 (S101). For example, when DREG-REQ is received from the mobile station 20 via the on-the-air transmission and reception processing unit 11, the idle mode processing unit 15 notifies this reception to the hand over processing unit 13. The hand over processing unit 13 transmits the internally stored MS context of the mobile station 20 to the host device 50 via the back bone transmission and reception unit 14. When DREG-REQ is received, the idle mode processing unit 15 generates DREG-CMD, and transmits it to the mobile terminal 20 via the on-the-air transmission and reception processing unit 11.

Then the mobile terminal 20 receives DREG-CMD, and transits to the idle mode (power saving standby state). The mobile terminal 20 reads the listening interval (Paging Listening Interval) included in this message, calculates the unavailable interval (Paging Unavailable Interval), and repeats these intervals alternately (S2, S3). For example, when this message is received, the idle protocol processing unit 27 notifies each interval to the message transmission and reception unit 21. The message transmission and reception unit 21 receives nothing in the unavailable interval, and receives MOB_PAG-ADV from the base station 10-1 in the listening interval (S4). In the processing in S4, it is assumed that this message includes an action code "No Action Required" (mobile station 20 need do nothing).

The base station 10-1, on the other hand, generates and transmits MOB_PAG-ADV in the listening interval (S102). For example, the idle mode processing unit 15 generates this message, and transmits it to the mobile station 20 via the on-the-air transmission and reception processing unit 11. Each interval is stored in the memory of the idle mode processing unit 15, for example, in advance.

The mobile station 20 moves to the cell boundary of the base station 10-1, and switches the preferred BS to the base station 10-2 (S5). Since the base station 10-2 is in a same paging group as the base station 10-1, the unavailable interval and listening interval are repeated at a same timing as the base station 10-1.

Then the mobile station 20 moves to the cell range of the base station 10-2, the base station 10-2 transmits MOB_PAG-ADV in the listening interval (S201), and the mobile station 20 receives this message in the listening interval (S6) .

The base station 10-2 detects user data addressed to the mobile station 20 (S201). For example, when the user data is received via the back bone transmission and reception unit 14, the hand over processing unit 13 notifies this reception to the idle mode processing unit 15, whereby the idle mode processing unit 15 detects the user data.

Then the base station 10-2 generates MOB_PAG-ADV in the listening interval, and transmits it to the mobile station 20 (S203). At this time, MOB_PAG-ADV includes the action code "Enter Network" (reconnection instruction to the network). For example, the idle mode processing unit 15 generates MOB_PAG-ADV including this action code, and transmits it to the mobile station 20 via the on-the-air transmission and reception processing unit 11.

Then the mobile station 20 receives this MOB_PAG-ADV (S7). For example, the idle protocol processing unit 27 receives this message from the base station 10-2 via the message transmission and reception unit 21.

Then the processing shifts to the network reconnection phase (Fig. 5), and the mobile station 20 measures the field strength of the adjacent base stations 10-1 and 10-3 in the unavailable interval (S8). The mobile station 20 also measures the field strength of the base station (PBS) 10-2 which has transmitted the reconnection instruction (MOB_PAG-ADV, including the action code "Enter Network").

For example, the idle protocol processing unit 27 notifies the judgment unit 29 that "MOB_PAG-ADV, including "Enter Network", was received, and the judgment unit 29 inquires the field strength calculation unit 24 about the measurement of the field strength between the adjacent base stations 10-1 and 10-3 and the base station (PBS) 10-2. At this time, the judgment unit 29 also inquires the time variation calculation unit 25 about the time variation of the field strength of the adjacent base stations 10-1 and 10-3 and the base station (PBS) 10-2.

Responding to the inquiry about field strength measurement, the field strength calculation unit 24 instructs the message transmission and reception unit 21 to measure CINR (field strength) of the adjacent base stations 10-1 and 10-3 and the base station (PBS) 10-2, and calculates each measured CINR.

Responding to the inquiry about time variation, the time variation calculation unit 25 calculates time variation based on each CINR calculated by the field strength calculation unit 24. The calculated time variation is stored in the adjacent table 23.

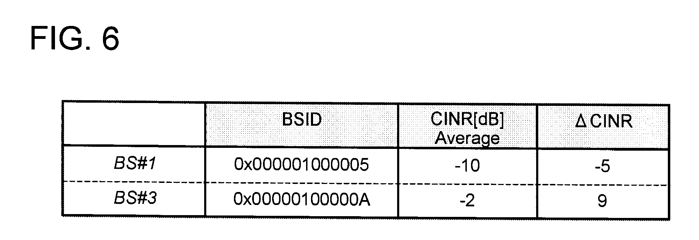

Fig. 6 shows an example of the adjacent table 23. The adjacent table 23 includes each field of BSID, CINR Average, and ΔCINR. ΔCINR indicates the above mentioned time variation of the field strength.

BSID is an identification code of the adjacent base station, and in the example in Fig. 6, the IDs of the base stations 10-1 and 10-3 (BS#1, BS#3) are stored. BSID is included in adjacent base station information (Neighbour Advertisement message) which is periodically transmitted from the base stations 10-1 and 10-3, for example, and the adjacent information reception unit 22 receives this information and stores it in the adjacent table 23.

CINR Average is a field for storing the average value of the previously measured CINR of the adjacent base station. The time variation calculation unit 25 calculates the average value of CINR according to the following expression.

[Expression 1]

$$\overline{\mu}_{CINR}[k] = (1 - \alpha_{avg})\overline{\mu}_{CINR}[k-1] + \alpha_{avg}CINR[k]$$

Here $\mu$CINR [k] is an average value of CINR of adjacent base station measured this time (time k), $\mu$CINR [k-1] is an average value of CINR of adjacent base station based the last time (time k-1), CINR [k] is a value of CINR of adjacent base station measured this time, and $\alpha$avg is a constant (average parameter). The time variation calculation unit 25 determines the average value of CINR by adding the average value of CINR measured the previous time and CINR measured this time. The time variation calculation unit 25 stores the average value of CINR ($\mu$CINR [k]) in the adjacent base stations 10-1 and 10-3, calculated by Expression 1, in the CINR Average field of the adjacent table 23 to implement updating.

$\mu$CINR [k-1] is stored in the adjacent table 23, and CINR [k] is calculated by the field strength calculation unit 24, and $\alpha$avg is included in a message, such as a DCD message, from the base station 10-2 (PBS). $\alpha$avg may be stored in the time variation calculation unit 25 in advance as a parameter. The time variation calculation unit 25 calculates Expression (1) by reading these values from the adjacent table 23.

ΔCINR in the adjacent table 23 is a field to store a time variation (differential value) of CINR. The time variation calculation unit 25 calculates the time variation according to the following expression.

[Expression 2]

$$\Delta_{CINR}[k] = (1 - \beta)\Delta_{CINR}[k-1] + \beta\left(\frac{\overline{\mu}_{CINR}[k] - \overline{\mu}_{CINR}[k-1]}{\Delta t}\right)$$

Here ΔCINR [k] is a time variation of CINR, ΔCINR [k-1] is a time variation of CINR measured the last time (time k-1), $\mu$CINR [k] is an average value of CINR calculated with Expression (1) this time (time k), $\mu$CINR [k-1] is an average value of CINR calculated the last time, and $\Delta t$ is an interval of measurement points. Here ΔCINR [k-1] and $\mu$CINR [k-1] are stored in the adjacent table 23, and $\Delta t$ is a value which the time variation calculation unit 25 holds in advance. The time variation calculation unit 25 calculates Expression (2) by reading these values from the adjacent table 23, and stores the calculated time variation (ΔCINR [k]) in the ΔCINR field of the adjacent table 23 to update the value.

In Fig. 5, the mobile terminal 20 compares the expected field strengths of the adjacent base stations 10-1 and 10-3, and the field strength of the base station (PBS) 10-2 which has transmitted the reconnection instruction (MOB_ PAG-ADV including "Enter Network"), and judges whether the expected field strengths of the base stations 10-1 and 10-3 are higher than the field strength of the base station (PBS) 10-2 which has transmitted the reconnection instruction (S9). The judgment unit 29 calculates the expected field strengths of the adjacent base station 10-1 and 10-3 using the following expression.

[Expression 3]

$$CINR_{NEI\_PRE} = \Delta CINR \times T_{NEXT} + CINR_{Neighbor}$$

Here $CINR_{NEI-PRE}$ is an expected field strength of an adjacent base station, $\Delta CINR$ is a time variation of CINR stored in the adjacent table 23, and $CINR_{Neighbor}$ is an average value of CINR of the adjacent base station at the current time (time k) ($\mu CINR$ [k] of Expression 1) stored in the adjacent table 23. $T_{NEXT}$ is a time until the start of the next paging interval (unavailable interval or listening interval).

The judgment unit 29 determines the change of CINR which is expected until the next paging interval start time by multiplying the time variation $\Delta CINR$ of CINR by $T_{NEXT}$, adds the average value of CINR of the adjacent base station ($CINR_{Neighbor}$) at the current time, and determines the field strengths ($CINR_{NEI-PRE}$) of the adjacent base stations 10-1 and 10-3 which are expected at the next paging interval start time.

The judgment unit 29 compares this expected field strength and the field strength of the base station (PBS) 10-2 calculated by the field strength calculation unit 24, and judges YES in S9 if the expected field strength is greater than the field strength of the base station (PBS), and NO if not.

If S9 is NO, that is in case that the field strength of the base station (PBS) 10-2 is greater, the mobile station 20 starts reconnection to the base station (PBS) 10-2 according to normal procedure (S10). For example, if it is judged as NO in S9, the judgment unit 29 instructs the network connection processing unit 26 to reconnect to the base station (PBS) 10-2. The network connection processing unit 26 transmits and receives the protocol message for reconnection to and from the base station (PBS) 10-2 so that connection is reestablished (S11).

The base station 10-2 requests the host device 50 to acquire the MS context of the mobile station 20, and receives this context (S204). The base station 10-2 transmits and receives a message based on this context, and transmits the user data to the mobile station 20 (S205).

If S9 is YES, on the other hand, that is in case field strength of the adjacent base station 10-3 is greater than the field strength of the base station (PBS) 10-2, the mobile station 20 executes the reconnection operation synchronizing with the adjacent base station 10-3, without performing the reconnection operation to the base station (PBS) 10-2 (S11 to S12 in Fig. 7).

The base station 10-3 requests the MS context of the mobile station 20 to the host device 50, and receives it (5301). Based on the context, the base station 10-3 transmits and receives the control message for reconnection to and from the mobile terminal 20, acquires user data from the base station 10-2, and sends it to the mobile station 20 (S302).

In this way, when the field strength of the adjacent base station 10-3 is expected to be higher than the field strength of the base station (PBS) 10-2 from which the reconnection instruction is received (YES in S9), the mobile station 20 executes the reconnection operation to the adjacent base station 10-3 without performing the reconnection operation to the base station 10-2 (S12 to S13). Since the mobile station 20 need not transmit and receive the message for reconnection to and from the base station 10-2, the air band resource can be saved accordingly.

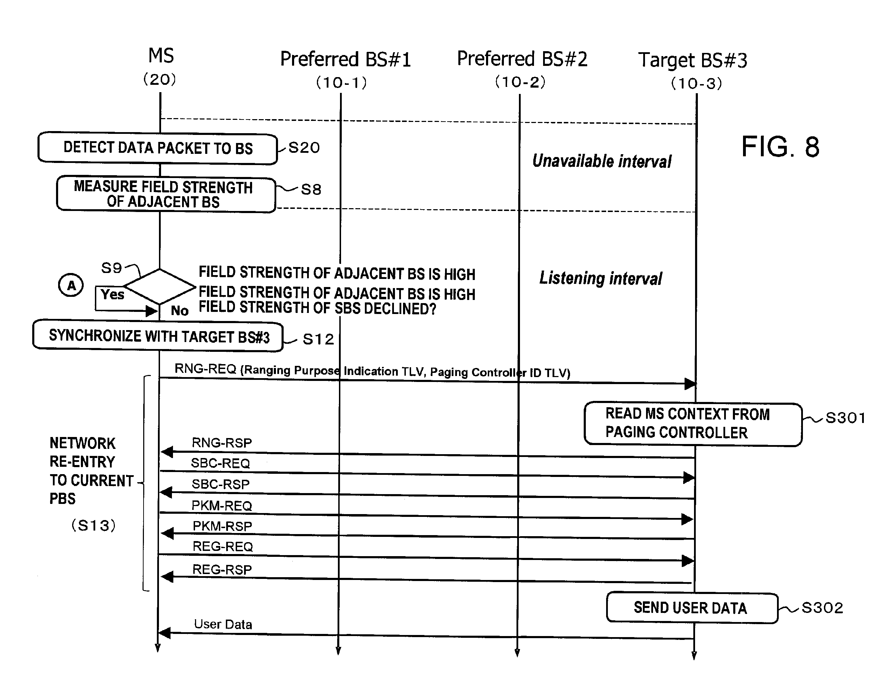

The above mentioned example is an example of data occurrence for downlink direction. The same operation can also be performed for uplink direction. Fig. 8 is a sequence diagram depicting an example of the reconnection phase in the uplink direction. The idle mode transition phase (Fig. 4) is the same as the above mentioned example.

When the mobile terminal 20 tries to send user data after transiting to idle mode (S20), the mobile terminal 20 measures the field strengths of the adjacent base stations 10-1 and 10-3, and the base station (PBS) 10-2 (S8). Since the mobile station 20 can exit the idle mode at any time, the field strength of the adjacent base stations 10-1 and 10-3 and the base station (PBS) 10-2 can be measured when the transmission of user data is desired (S20), regardless the paging interval (unavailable interval or listening interval). The rest of the operation is the same as the above mentioned downlink direction.

In the above mentioned example, the judgment unit 29 uses the field strength of the base station (PBS) 10-2, which has transmitted the reconnection instruction, as the judgment reference (S8, S9). The judgment unit 29 may use a threshold held internally, for example, as the judgment reference. In this case, the judgment unit 29 judges as YES if the field strength of the adjacent base station is higher than the threshold, and as NO if not in S9.

The above example was described regarding CINR as the field strength (Expression 1 to Expression 3). Instead, CIR (Carrier to Interference Ratio), CNR (Carrier to Noise Ratio), SINR (Signal to Interference plus Noise Ratio), SIR (Signal to Interference Ratio), SNR (Signal to Noise Ratio), and round trip delay or RSSI (Receive Signal Strength Indicator) may be regarded as the field strength. In this case, an average value or differential value of SINR and so on is stored in the adjacent table 23, and the second term of the right side of Expression 1 becomes the measurement value of SINR or the like.

In the above example, each base station 10-1 to 10-3 was described as base stations belonging to a same paging group. However each base station 10-1 to 10-3 may belong to different paging groups. The only difference is that in this case each base station 10-1 to 10-3 has a different paging interval (unavailable interval and listening interval), and transmits MOB_PAG-ADV in different paging interval, and the rest is the same as the case of the base stations belonging to the same paging group.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the scope of the claims.

**Claims**

1. A radio communication method for performing radio communication between a base station and a terminal, comprising the steps of:

comparing field strength of the base station which transmitted a reconnection instruction and filed strength of adjacent base stations which locate adjacent to the base station, when the terminal in power saving standby mode receives the reconnection instruction from the base station, and
controlling whether terminal reconnects or not to the base station which transmitted the reconnection instruction, according to the result of the comparison.

2. The radio communication method according to Claim 1, wherein the controlling step controls so that the terminal does not reconnect to the base station which transmitted the reconnection instruction, when the field strength of the adjacent base station is expected to be higher than the field strength of the base station which transmitted the reconnection instruction, according to the comparison.

3. The radio communication method according to Claim 2, wherein the controlling step controls so that the terminal reconnects to one of the adjacent base stations.

4. A radio communication method for performing radio communication between a base station and a terminal, comprising the steps of:

comparing field strength of the base station in which the terminal registers its position in the last time, and filed strength of adjacent base stations which locate adjacent to the base station, when the terminal in a power saving standby state quits the state to transmit user data, and
controlling whether the terminal reconnects or not to the base station in which the terminal registers its position in the last time, according to the result of the comparison.

5. The radio communication method according to Claim 4, wherein the controlling step controls so that the terminal does not reconnect to the base station in which the terminal registers its position the last time, when the field strength of the adjacent base station is expected to be higher than the field strength of the base station in which the terminal registers its position in the last time.

6. The radio communication method according to Claim 5, wherein the controlling step controls so that the terminal reconnects to one of the adjacent base stations.

7. A terminal for performing radio communication with a base station, comprising:

a judgment unit which compares field strength of the base station which transmitted a reconnection instruction and field strength of adjacent base stations which locates adjacent to the base station, when terminal in a power saving standby state receives the reconnection instruction from the base station; and
a transmission and reception processing unit which decides whether terminal reconnects or not to the base station which transmitted the reconnection instruction, according to the result of the comparison.

8. The terminal according to Claim 7, wherein the transmission and reception processing unit switches so that the terminal does not reconnect to the base station which transmitted the reconnection instruction, when the field strength of the adjacent base station is expected to be higher than the field strength of the base station which transmitted the reconnection instruction according to the comparison.

9. The terminal according to Claim 8, wherein the transmission and reception processing unit switches so that the terminal connects one of to the adjacent base stations.

10. A terminal for performing radio communication with a base station, comprising:

a judgment unit which compares field strength of the base station in which the terminal registers its position the last time and filed strength of adjacent base stations which locate adjacent to the base station, when the terminal in a power saving standby state quits the state to transmit user data; and
a transmission and reception unit which switches whether the terminal reconnects or not to the base station in which the terminal registers its position in the last time, according to the result of the comparison.

11. The terminal according to Claim 10, wherein the transmission and reception processing unit switches so that the terminal does not reconnect to the base station in which the terminal registers its position the last time, when the field strength of the adjacent base station is expected to be higher than the field strength of the base station in which the terminal registers its position in the last time by the judgment unit.

12. The terminal according to Claim 11, wherein the transmission and reception processing unit switches so that the terminal reconnects to one of the adjacent base stations.

13. Software which, when executed by a processor of a portable communications device, provides the terminal according to any one of claims 7 to 12.

# FIG. 1

SAME Paging Group

②SAVE MS CONTEXT

50

51

Paging Cntrler

⑧RETRIEVE MS CONTEXT

10-1

BS#1

BS#2 — 10-2

BS# 3 — 10-3

①DREG-REQ

④MOB_PAG-ADV

⑤MOB_PAG-ADV

⑦Network Re-entry (Idle EXIT)

③ DREG - CMD

⑥MOB_PAG-ADV (Enter Network)

MS

MS

MS

MS

MS

20

20

20

20

HO

20

RADIO COMMUNICATION SYSTEM 1

# FIG. 2

BASE STATION — 10

HO PROCESSING UNIT — 13

NOTIFY REGISTRATION OF MS

15 — IDLE MODE PROCESSING UNIT

12 — NETWORK ENTRY PROCESSING UNIT

11 — ON-THE-AIR TRANSMISSION AND RECEPTION PROCESSING UNIT

14 — BACK BONE TRANSMISSION AND RECEPTION UNIT

EP 2 112 850 A1

# FIG. 3

**MOBILE STATION** 20

- 23 NEIGHBOR BS TABLE
- 29 JUDGMENT UNIT
- 22 ADJACENT INFORMATION RECEPTION UNIT
- 25 TIME VARIATION CALCULATION UNIT
- 24 FIELD STRENGTH CALCULATION UNIT
- 26 NETWORK CONNECTION PROCESSING UNIT
- 27 IDLE PROTOCOL PROCESSING UNIT
- 28 BS SWITCHING PROCESSING UNIT
- 21 ON-THE-AIR MESSAGE TRANSMISSION AND RECEPTION PROCESSING UNIT

FIG. 4

| MS<br>(20) | Preferred BS#1<br>(10-1) | Preferred BS#2<br>(10-2) | Target BS#3<br>(10-3) |

IDLE MODE REQUEST — S1

DREG-REQ →

SAVE MS CONTEXT IN PC — S101
SEND RESPONSE

← DREG-CMD

START UNAVAILABLE INT. — S2

Idle Mode

SWITCH LISTENING INTERVAL — S3

SEND PAG-ADV IN LISTENING INT.
S102

← MOB_PAG-ADV

RECEIVE PAG-ADV MESSAGE
S4

SWITCH TO PREFERRED BS#2 — S5

SEND PAG-ADV IN LISTENING INT. — S201

← MOB_PAG-ADV

RECEIVE PAG-ADV MESSAGE — S6

DETECT DATA PACKET TO THIS MS — S202

MOB_PAG-ADV
(Action Code=Enter Network)

SEND PAG-ADV IN LISTENING INT. — S203

RECEIVE PAG-ADV MESSAGE
S7

EP 2 112 850 A1

FIG. 5

MS (20) | Preferred BS#1 (10-1) | Preferred BS#2 (10-2) | Target BS#3 (10-3)

DETECT DATA PACKET TO THIS MS — S202

SEND PAG-ADV IN LISTENING INT. — S203

**MOB_PAG-ADV** (Action Code=Enter Network)

MEASURE FIELD STRENGTH OF ADJACENT BS — S8

S9 — FIELD STRENGTH OF ADJACENT BS IS HIGH
(A) ← Yes FIELD STRENGTH OF ADJACENT BS IS HIGH
No FIELD STRENGTH OF SBS DECLINED?

START RECONNECTION TO P-BS#2 — S10

RNG-REQ (Ranging Purpose Indication TLV, Paging Controller ID TLV)

READ MS CONTEXT FROM PAGING CONTROLLER — S204

NETWORK RE-ENTRY TO CURRENT PBS (S11)

RNG-RSP
SBC-REQ
SBC-RSP
PKM-REQ
PKM-RSP
REG-REQ
REG-RSP

SEND USER DATA — S205

User Data

EP 2 112 850 A1

# FIG. 6

EP 2 112 850 A1

| | BSID | CINR[dB] Average | ΔCINR |
|---|---|---|---|
| BS#1 | 0x000001000005 | -10 | -5 |
| BS#3 | 0x00000100000A | -2 | 9 |

## FIG. 7

MS (20)

Preferred BS#1 (10-1)

Preferred BS#2 (10-2)

Target BS#3 (10-3)

DETECT DATA PACKET TO THIS MS ~S202

SEND PAG-ADV IN LISTENING INT. ~S203

MOB_PAG-ADV (Action Code=Enter Network)

MEASURE FIELD STRENGTH OF ADJACENT BS ~S8

S9 FIELD STRENGTH OF ADJACENT BS IS HIGH / FIELD STRENGTH OF ADJACENT BS IS HIGH / FIELD STRENGTH OF SBS DECLINED?

Yes / No

(A)

SYNCHRONIZE WITH TARGET BS#3 ~S12

RNG-REQ (Ranging Purpose Indication TLV, Paging Controller ID TLV)

READ MS CONTEXT FROM PAGING CONTROLLER ~S301

RNG-RSP

SBC-REQ

SBC-RSP

PKM-REQ

PKM-RSP

REG-REQ

REG-RSP

NETWORK RE-ENTRY TO CURRENT PBS (S13)

User Data

SEND USER DATA ~S302

16

FIG. 8

| | MS (20) | Preferred BS#1 (10-1) | Preferred BS#2 (10-2) | Target BS#3 (10-3) |

DETECT DATA PACKET TO BS — S20

Unavailable interval

MEASURE FIELD STRENGTH OF ADJACENT BS — S8

S9 — (A) Yes / No

FIELD STRENGTH OF ADJACENT BS IS HIGH
FIELD STRENGTH OF ADJACENT BS IS HIGH
FIELD STRENGTH OF SBS DECLINED?

Listening interval

SYNCHRONIZE WITH TARGET BS#3 — S12

RNG-REQ (Ranging Purpose Indication TLV, Paging Controller ID TLV)

READ MS CONTEXT FROM PAGING CONTROLLER — S301

NETWORK RE-ENTRY TO CURRENT PBS (S13)

RNG-RSP
SBC-REQ
SBC-RSP
PKM-REQ
PKM-RSP
REG-REQ
REG-RSP

SEND USER DATA — S302

User Data

EP 2 112 850 A1

FIG. 9

Europäisches
Patentamt

European
Patent Office

Office européen
des brevets

## EUROPEAN SEARCH REPORT

Application Number

EP 09 15 4431

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Universal Mobile Telecommunications System (UMTS); UE Procedures in Idle Mode and Procedures for Cell Reselection in Connected Mode (3GPP TS 25.304 version 3.4.0 Release 1999); ETSI TS 125 304" ETSI STANDARDS, LIS, SOPHIA ANTIPOLIS CEDEX, FRANCE, vol. 3-R2, no. V3.4.0, 1 September 2000 (2000-09-01), XP014008625 ISSN: 0000-0001 | 1,4,7, 10,13 | INV. H04W48/20 |
| Y | | 2,3,5,6, 8,9,11, 12 | |
| | Sections 5.2.2, 5.2.4 and 8.3 ----- | | |
| X | WO 01/26407 A (ERICSSON TELEFON AB L M [SE]) 12 April 2001 (2001-04-12) * abstract * * page 3, line 27 - page 4, line 27 * * page 11, line 1 - line 14 * ----- | 1,4,7, 10,13 | |
| X | US 5 381 464 A (O'KEEFE JULIA A [US] ET AL) 10 January 1995 (1995-01-10) * figure 1 * * column 1, line 15 - line 19 * * column 3, line 56 - line 63 * ----- | 1,4,7, 10,13 | TECHNICAL FIELDS SEARCHED (IPC) H04W |
| Y | WO 92/01950 A (BRITISH TELECOMM [GB]) 6 February 1992 (1992-02-06) * page 4, line 7 - line 36 * * page 5, line 7 - line 19 * ----- | 2,3,5,6, 8,9,11, 12 | |

The present search report has been drawn up for all claims

| Place of search | Date of completion of the search | Examiner |
|---|---|---|
| Munich | 22 July 2009 | Aguiar, Jorge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 4431

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2009

| Patent document cited in search report | | Publication date | Patent family member(s) | | Publication date |
|---|---|---|---|---|---|
| WO 0126407 | A | 12-04-2001 | AR | 032602 A1 | 19-11-2003 |
| | | | AT | 364972 T | 15-07-2007 |
| | | | AU | 770884 B2 | 04-03-2004 |
| | | | AU | 7975800 A | 10-05-2001 |
| | | | CN | 1408191 A | 02-04-2003 |
| | | | DE | 60035206 T2 | 21-02-2008 |
| | | | EP | 1219132 A1 | 03-07-2002 |
| | | | ES | 2287035 T3 | 16-12-2007 |
| | | | JP | 2003511927 T | 25-03-2003 |
| | | | MX | PA02003418 A | 20-08-2002 |
| | | | TW | 494695 B | 11-07-2002 |
| | | | US | 6628942 B1 | 30-09-2003 |
| US 5381464 | A | 10-01-1995 | NONE | | |
| WO 9201950 | A | 06-02-1992 | AT | 170294 T | 15-09-1998 |
| | | | AU | 649056 B2 | 12-05-1994 |
| | | | AU | 8223891 A | 18-02-1992 |
| | | | CA | 2087843 A1 | 26-01-1992 |
| | | | DE | 69130065 D1 | 01-10-1998 |
| | | | DE | 69130065 T2 | 25-02-1999 |
| | | | DK | 540596 T3 | 25-05-1999 |
| | | | EP | 0540596 A1 | 12-05-1993 |
| | | | ES | 2121571 T3 | 01-12-1998 |
| | | | GB | 2263037 A | 07-07-1993 |
| | | | HK | 133496 A | 02-08-1996 |
| | | | JP | 3169606 B2 | 28-05-2001 |
| | | | JP | 6501307 T | 10-02-1994 |
| | | | SG | 47591 A1 | 17-04-1998 |
| | | | US | 5396253 A | 07-03-1995 |

EPO FORM P0459

For more details about this annex : see Official Journal of the European Patent Office, No. 12/82